# EUROPEAN PATENT SPECIFICATION

(11) **EP 3 119 842 B1**
(45) Date of publication and mention of the grant of the patent: **28.08.2019**
(21) Application number: 15710173.4
(22) Date of filing: 16.03.2015
(51) Int. Cl.: C09D 11/101, C09D 11/106, C09D 11/102, C09D 11/107

(54) **RADIATION CURABLE COMPOSITIONS COMPRISING INERT RESINS**
STRAHLUNGSHÄRTBARE ZUSAMMENSETZUNG MIT INERTEN HARZEN
COMPOSITION DURCISSABLE PAR RAYONNEMENT CONTENANT DES RÉSINES INERTES

(30) Priority: 20.03.2014 EP 14160937
(43) Date of publication of application: 25.01.2017
(73) Proprietor: Allnex Belgium S.A., 1620 Drogenbos (BE); ALLNEX AUSTRIA GmbH, 8402 Werndorf (AT)
(72) Inventor: CAPPELLE, Steven, B-9400 Ninove (BE); GEVAERT, Paul, B-9500 Geraardsbergen (BE); DE WAELE, Luc, B-9400 Denderwindeke (BE); BILLIANI, Johann, A-8042 Graz (AT)
(74) Representative: Destryker, Elise Martine
(86) International application number: PCT/EP2015/055452
(87) International publication number: WO 2015/140112

(56) References cited:
- EP-A1- 0 799 871
- EP-A1- 2 508 575
- EP-A2- 0 635 523
- WO-A1-98/44007
- WO-A1-2008/004002
- US-A- 4 134 813

## Description

### Field of the invention

The present invention relates to radiation curable compositions comprising inert resins that are suitable for use on various substrates, including plastic substrates; to their preparation and their uses.

### Background of the invention

Commercially available UV lithographic or flexographic inks have limited adhesion on plastic substrates. Especially adhesion on plastic substrates without adhesion primer is poor. It is theoretically possible to increase adhesion on plastics by using "inert" resins diluted in monomers. WO2008/015474 & WO2008/004002 disclose printing inks with inert resins dissolved in e.g. tetrahydrofurfurylacrylate, N-vinyl caprolactam and phenoxyethyl acrylate. The inks disclosed herein are not suited for lithographic or flexographic applications due to a too low UV reactivity.

The UV reactivity can be increased by adding multifunctional acrylates, but this has a negative impact on adhesion. For that reason, an adhesion primer is currently applied on the plastic substrate to increase adhesion before applying the UV curable ink. There is thus a need for radiation curable ink binders with improved adhesion to plastic substrates and advantageously an acceptable UV reactivity, good pigment wetting properties and a good water balance (in case of lithographic ink). If no primer is needed, the application process is easier and often more cost effective.

The UV curable ink binders and inks of the present invention provide a solution to one or more of the above problems.

US 4 134 813 discloses photopolymerizable compositions which contain one or more olefinically unsaturated compounds and from 0.2 to 20% by weight of aromatic carbonyl type photoinitiators. In the Examples section clear coating compositions based on ethylenically unsaturated esters and ethers are described. The compounds disclosed in this document do not qualify as inert resins due to the high amount of double bonds present in the molecules.

WO 98/44007 discloses radiation-polymerizable compositions containing at least one radiation curable acrylate resin oligomer prepared by reacting an alkoxylated polyol with a first acid component which includes an ethylenically unsaturated carboxylic acid; and a rheology modifier prepared by reacting a diepoxide with a second acid component which includes an ethylenically unsaturated carboxylic acid or a reactive thereof in the presence of a polyamide based on a polymerized fatty acid.

Again, the compounds disclosed therein do not qualify as inert resins due to the high amount of double bonds present in the molecule.

### Summary of the invention

Against this background we now provide a radiation curable composition that is suitable for use in lithographic or flexographic inks or letterpress applications, and that provides excellent adhesion on multiple plastic substrates. More in particular we provide a radiation curable composition (I) comprising
- at least one ethylenically unsaturated compound (A), and
- at least one inert copolymer (B) that is obtained by an addition reaction of:
   (b) from 3 to 50% by weight of at least one monofunctional glycidyl ether (b1) and/or at least one monofunctional glycidyl ester (b2) of aliphatic saturated monocarboxylic acids
   during the free radical polymerization of:
   (b') from 50 to 97% by weight of at least two ethylenically unsaturated copolymerizable monomers of which at least one contains at least one -COOH group (b'1),
   wherein the quantity of -COOH groups in component (b'1) is at least equimolar to the quantity of epoxy groups in component (b), and
   wherein the amount of solvents in the radiation curable composition (I) of the invention is below 10% by weight, more preferably below 5% by weight. Typically the amount of solvents, relative to the total weight of the radiation curable composition (I), is below 1% by weight, more typically below 0.5% by weight.

By an "ethylenically unsaturated compound" (A) is meant to designate a compound bearing vinyl and/or (meth)acrylic groups. By "(meth)acrylic groups" is meant to designate acrylic groups, methacrylic groups or a mixture of both. Acrylic groups are often preferred.

By an "inert copolymer" (B) is meant to designate a copolymer that does not take part in the polymerization process. Such copolymers contain few or no curable reactive groups. "Curable reactive groups" are those capable of participating in the cure reaction that takes place when the radiation curable composition of the present invention is exposed to energy radiation, such as UV radiation, electron beam and/or actinic radiation. Due to imperfections in manufacture or to degradation on storage, resins that are considered essentially free of reactive groups may actually have a small number of curable reactive groups. Preferred are copolymers with 0.1 or fewer equivalents of curable reactive groups per kilogram; more preferred is 0.01 or fewer; even more preferred is 0.003 or fewer; still more preferred is 0.001 or fewer, and most preferred is none.

Some common reactive groups that are used in radiation curable compositions are double bonds in the form of e.g. (meth)acrylic groups and/or vinyl groups. Consequently, copolymers containing (meth)acrylic and/or vinyl groups in large amounts do not qualify as inert copolymers in the present invention. However, double bonds contained in aromatic rings are known to generally be inert during radiation curing.

Typically copolymers (B) of the invention have 0.1 or fewer equivalents of double bonds (ethylenically unsaturated groups) per kilogram; more preferred is 0.01 or fewer; even more preferred is 0.003 or fewer; still more preferred is 0.001 or fewer, and most preferred is none. Most typical are copolymers (B) with 0.1 or fewer equivalents of (meth)acrylic groups per kilogram; more preferred is 0.01 or fewer; even more preferred is 0.003 or fewer; still more preferred is 0.001 or fewer, and most preferred is none.

In particular there is provided a radiation curable composition comprising:
- at least one ethylenically unsaturated compound (A), and
- at least one copolymer (B) with 0.1 or fewer, preferably 0.003 or fewer, equivalents of radiation curable reactive groups per kilogram, that is obtained by an addition reaction of:
   (b) from 3 to 50% by weight of at least one monofunctional glycidyl ether (b1) and/or at least one monofunctional glycidyl ester (b2) of aliphatic saturated monocarboxylic acids
   during the free radical polymerization of:
   (b') from 50 to 97% by weight of at least two ethylenically unsaturated copolymerizable monomers of which at least one contains at least one -COOH group (b'1),
   wherein the quantity of -COOH groups in component (b'1) is at least equimolar to the quantity of epoxy groups in component (b), and
   wherein the amount of solvents in the radiation curable composition of the invention is below 10% by weight. Preferably the amount of radiation curable reactive groups per kilogram is 0.001 or fewer, and most preferred it is none. Most typical are copolymers (B) with 0.1 or fewer equivalents of (meth)acrylic groups per kilogram; more preferred is 0.01 or fewer; even more preferred is 0.003 or fewer; still more preferred is 0.001 or fewer, and most preferred is none.

Use of an inert copolymer (B) according to the invention presents one or more of the following advantages:
- The inert copolymer can be produced as high solid or even in bulk polymerization which avoids the use of toxicologically objectionable high boiling solvents such as alkylated aromatic compounds,
- The inert copolymer is compatible with most radiation curable compounds,
- The inert copolymer in general shows broad compatibility with range of UV curable monomers,
- The inert copolymer in general provides good adhesion on most plastic substrates,
- The inert copolymer in general is providing good pigment wetting,
- The inert copolymer in general is providing good ink-water balance in lithographic ink formulation,
- The inert copolymer in general exhibits a low viscosity.

The inert copolymer (B) of the invention typically is obtained by an addition reaction of:
(b) from 3 to 50% by weight of at least one monofunctional glycidyl ether (b1) and/or at least one monofunctional glycidyl ester (b2) of aliphatic saturated monocarboxylic acids
during the free radical polymerization of:
(b') from 50 to 97% by weight of at least two ethylenically unsaturated copolymerizable monomers of which at least one contains at least one -COOH group (b'1),
wherein the quantity of -COOH groups in component (b'1) is at least equimolar to the quantity of epoxy groups in component (b).

At least part of the monomers (b) hence will build into the backbone of the inert resin (B), this via an addition reaction of compounds (b) during the polymerization process of compounds (b'). Monomers (b) typically are selected from monofunctional glycidyl ethers (b1) and/or from monofunctional glycidyl esters (b2) of aliphatic saturated monocarboxylic acids. Compounds (b2) preferably are monofunctional glycidyl esters (b2) of aliphatic saturated monocarboxylic acids having a tertiary or quaternary alpha carbon atom.

Compounds (b1) and/or (b2) are typically aliphatic compounds. The monofunctional glycidyl ether typically is an aliphatic monofunctional glycidyl ether. The monofunctional glycidyl ester typically is an aliphatic monofunctional glycidyl ester.

Preferably compounds (b) comprise at least one monofunctional glycidyl ester (b2) of aliphatic saturated monocarboxylic acids having a tertiary or quaternary alpha carbon atom.

Usually the ethylenically unsaturated copolymerizable monomers (b') comprise, relative to the total mass of all comonomers (b'), a mixture of:
(b'1) from 1 to 20% by weight of at least one ethylenically unsaturated monomer having at least one -COOH group,
(b'2) from 30 to 99% by weight of at least one other ethylenically unsaturated monomer,
(b'3) from 0 to 50% by weight of at least one hydroxyl functional ethylenically unsaturated monomer,
wherein the comonomers (b'1) to (b'3) all differ from each other, and wherein the sum of their weight percentages equals 100%.

Comonomers (b'1) typically are selected from α,β-unsaturated monocarboxylic acids and/or α,β-unsaturated dicarboxylic acids. Preferably comonomers (b'1) are selected from acrylic acid, from methacrylic acid, and from mixtures of both.

Comonomers (b'2) typically are selected from one of more of: alkyl (meth)acrylates, styrene, divinylbenzene, alpha-methylstyrene, vinylnaphtalene and alkyl substituted styrene. The alkyl group of the alkyl (meth)acrylate typically contains from 1 to 18 carbon atoms, more preferably from 1 to 6 carbon atoms. Such compound is further referred to as a C1-18 alkyl(meth)acrylate, respectively a C1-6 alkyl(meth)acrylate. The alkyl group of the alkyl substituted styrene listed herein preferably contains from 1 to 2 carbon atoms. Such compound is further referred to as a C1-2 alkyl substituted styrene.

Comonomers (b'3) typically are hydroxy alkyl(meth)acrylates, more in particular C1-4 hydroxy alkyl(meth)acrylates.

Compositions (I) of the invention typically comprise, relative to the total weight of (A) and (B), from 10 to 90% by weight of ethylenically unsaturated compounds (A) and from 10 to 90% by weight of inert copolymers (B).

Preferably compounds (A) are (meth)acrylated compounds. It can be (meth)acrylated monomers and/or a (meth)acrylated oligomers. Preferred are compounds (A) that have at least one, preferably at least 2 (meth)acrylate groups. Particularly preferred are compounds (A) with from 2 to 6, even more preferably from 3 to 6 (meth)acrylate groups.

Preferably the inert copolymer (B) has a number average molecular weight (Mn) of from 750 to 20000 dalton. Preferably the Mn is at least 1000, more preferably at least 1500 dalton. Preferably the Mn is at most 10000, more preferably at most 5000 dalton.

The radiation curable composition (I) of the invention can be prepared in many ways. Typically however the free radical polymerization of the ethylenically unsaturated copolymerizable monomers (b') used to form the copolymer (B) takes place in the presence of at least one polymerization initiator. A few examples of suitable polymerization initiators are di-tert-butyl peroxide, di-tert-amyl peroxide, tert-butyl peroxy-2-ethylhexanoate and/or tert-amyl peroxy-2-ethylhexanoate.

Typically this polymerization initiator is used in an amount of from 0.5 to 5% by weight, based on the total mass of the monomers (b').

Compositions (I) of the invention are suitable for many purposes, including for the making of coating compositions, adhesives, inks or varnishes. An aspect of the invention hence relates to a coating composition, adhesive, ink or varnish comprising a radiation curable composition according to the invention. A particular aspect of the invention relates to radiation curable ink compositions comprising a least one radiation curable composition (I) of the invention (any of the above).

In particular there is provided a radiation curable ink composition comprising:
a. at least one ethylenicaly unsaturated compound (A) as define above,
b. at least one inert copolymer (B) as defined above,
c. at least one radical photoinitiator, and
d. at least one pigment.

The radical photoinitiator is typically used in an amount from 1 to 15% by weight, relative to the total weight of the ink composition.

A radiation curable lithographic ink composition according to the invention typically has a viscosity of between 10000 and 200000 mPa.s at 25°C and 100 sec-1. The inert copolymer (B) is then typically present in an amount of from 10 to 50% by weight, preferably from 15 to 40% by weight, based on the total weight of the lithographic ink. Preferably the radiation curable lithographic ink composition has a viscosity of between 20000 and 120000 mPa.s at 25°C and 100 sec-1.

A radiation curable flexographic ink composition according to the invention typically has a viscosity of between 100 and 20000 mPa.s at 25°C and 100 sec-1. The inert copolymer (B) is then typically present in an amount of from 5 to 50% by weight, prefer from 10 to 40% by weight, based on the total weight of the flexographic ink. Preferably the radiation curable lithographic ink composition has a viscosity of between 500 and 2000 mPa.s at 25°C and 100 sec-1.

Radiation curable ink compositions of the invention typically comprise at least one ethylenically unsaturated compound (A) having at least three (meth)acrylic groups. Typically this kind of ethylenically unsaturated compounds (A) is present in an amount of at least 10% by weight, preferably at least 20% by weight, even more preferable 30% by weight and most preferably at least 40% by weight, relative to the total weight of compounds (A). As indicated earlier, compounds (A) are typically selected from (meth)acrylated monomers and/or (meth)acrylated oligomers.

Another aspect of the invention relates to an article coated or treated, partially or entirely, with a radiation curable composition (I) according to the invention.

Yet another aspect of the invention relates to the use of a radiation curable composition according to the invention for the making of inks, varnishes, adhesives and coatings. Provided herein is also a process for the manufacturing of inks, varnishes, adhesives and coatings wherein a radiation curable composition according to the invention is used, followed by a step of exposing the ink, varnish, adhesive or coating composition to energy radiation such as UV radiation, electron beam and/or actinic radiation.

### Detailed description

Provided herein is a radiation curable composition comprising
- at least one ethylenically unsaturated compound (A), and
- at least one inert copolymer (B) that is obtained by an addition reaction of:
   (b) from 3 to 50% by weight of at least one monofunctional glycidyl ether (b1) and/or at least one monofunctional glycidyl ester (b2) of aliphatic saturated monocarboxylic acids
   during the free radical polymerization of:
   (b') from 50 to 97% by weight of at least two ethylenically unsaturated copolymerizable monomers of which at least one contains at least one -COOH group (b'1),
wherein the quantity of -COOH groups in component (b'1) is at least equimolar to the quantity of epoxy groups in component (b), and
wherein the amount of solvents in the radiation curable composition of the invention is below 10% by weight, more preferably below 5% by weight. Typically the amount of solvents, relative to the total weight of the radiation curable composition, is below 1% by weight, more typically below 0.5% by weight. In a preferred embodiment no solvent is used in the production process of the radiation curable composition of the invention.

Often though the quantity of -COOH groups in components (b'1) exceeds the quantity of epoxy groups in component (b).

It is known that inert copolymers (B) can be prepared by polymerization in bulk or with low amount of solvents. In the case of bulk polymerization with a glycidyl ester and/or a glycidyl ether, the ester and/or ether is introduced as initial charge and then reacted completely with monomers of which at least one contains at least equimolar quantities of acid groups, typically carboxyl groups. Thus, in addition to the polymerization, a reaction of the epoxide groups with the carboxyl groups takes place, in which in each case one ester group and one secondary hydroxyl group are formed.

The polymerization is preferably carried out in bulk (as a mass polymerization at the end of polymerization). The term "bulk polymerization" refers to a polymerization which is generally carried out without solvent. In some cases, however, the presence of a small proportion of solvent, namely up to 20%, preferably up to 10% and, in particular, up to 5% by weight, based on the mass of the starting components, is also possible. Solvent levels below 1% by weight, more in particular below 0.5% by weight, relative to the total weight of the radiation curable composition are preferred. However, working without solvent is preferred.

The advantage of bulk or high solid polymerization, in comparison with polymerization in a solvent, lies in the freedom of choice of the solvents or monomers used for dilution after the end of the reaction. A further advantage is that ethylenically unsaturated monomers and/or oligomers (A) can be used to dilute the polymer, and that high-boiling solvents which in some cases are toxicologically objectionable, for example, alkylated aromatic compounds, can be substantially avoided.

The polymerization may be carried out in any desired manner, for example, it can be carried out in such a way that all components (b) and (b') are reacted in unison together with one or more free-radical initiators, with the ester formation and the polymerization taking place simultaneously alongside one another. An alternative procedure comprises initially charging component (b), the monofunctional glycidyl ester(s) and/or monofunctional glycidyl ether(s), and reacting it conventionally at from 100° to 210° C with components (b') and at least one free-radical initiator in a bulk polymerization. A third route in accordance with the invention is the polymerization of at least one component from group (b') in the first step, with the addition in the second step of further (or, if appropriate, another) initiator, the remaining quantity of components (b'), and component (b). This process makes it possible to carry out the polymerization and the esterification at different temperatures. The fourth route in accordance with the invention is the reaction of the polymer formed in the first stage, if desired in solution, with component (b) in a second stage. Depending on the parameters of the monomers involved, one of the proposed procedures may be more favorable than others.

The inert copolymer (B) preferably has an acid number of at least 0.1 mg KOH/g and at most 15 mg KOH/g, more preferably at most 10 mg KOH/g. Typically the inert copolymer (B) has an acid number of at least 0.3 mg KOH/g, more preferably at least 0.5 mg KOH/g. The method for determining acid numbers is defined infra.

The inert copolymers (B) of present invention typically have a number average molecular weight (Mn) of between 750 and 20000 dalton. Preferably the Mn is at least 1000, more preferably at least 1500 dalton. Preferably the Mn is at most 20000, more preferably of at most 15000, even more preferably at most 10000, most preferably at most 5000 dalton.

The Mn (number average molecular weight) and Mw (weight average moleculare weight) may be measured by known techniques in the art, such as gel permeation chromatography (GPC), typically using polystyrene standards. Most typically the Mn and Mw are measured by GPC (in a tetrahydrofuran (THF) solution, injected on a 3xPLgel 5µm Mixed-D LS 300mmx7.5mm column MW - range 162 to 377400 Daltons & calibrated with polystyrene standards (200- 400.000 Daltons, e.g. Easycal from Polymer Laboratories), at 40 °C).

Inert copolymers (B) of the invention typically have a glass transition temperature (Tg) of at least 0°C, preferably at least 10°C, more preferably at least 20°C. Generally the Tg is at most 150°C, preferably at most 120°C, more preferably at most 100°C, as measured by dynamic scanning calorimetry (DSC) e.g. according to ASTM El 356-08 with a heating gradient of 10 degrees C per minute.

Compounds (b) used to make the inert copolymer (B) can be any suitable monofunctional glycidylether and/or any monofunctional glycidylester compound. As component (b) it is preferred to use glycidyl esters of α-alkylalkanemonocarboxylic acids and/or α,α-dialkylalkanemonocarboxylic acids; aliphatic or aromatic glycidyl ether(s); individually or in a mixture. The compounds of (b) can be selected, for example, from the glycidyl esters of 2,2-dimethylpropionic acid, 2,2-dimethylundecanoic acid and neo acids such as neohexanoic acid, neononanoic acid and neodecanoic acid (also known as Cardura® E-10P available from Momentive), o-cresylglycidyl ether, C13-15 alkyl glycidyl ether (Grilonit® RV 1814 available from EMS Chemie AG) and C12-14 alkyl glycidyl ether (Grilonit Epoxide 8 available from EMS Chemie AG or Polypox R24 available from UPPC AG). The total number of carbon atoms in the initial monocarboxylic acid used to prepare the glycidyl ester is in general between 4 and 30 and, in particular, between 5 and 20. Particularly preferred is the glycidyl ester of neodecanoic acid, a C12-14 alkyl glydicyl ether and/or a C13-15 alkyl glycidyl ether. Particularly suited is the glycidyl ester of neodecanoic acid.

Components (b') used to prepare the inert copolymer (B) typically comprise at least one ethylenically unsaturated monomer having at least one -COOH group (b'1) and at least one ethylenically unsaturated monomer different therefrom, typically selected from one or more comonomers (b'2) and/or (b'3) as defined infra.

Component (b') for instance preferably comprises a mixture of:
- from 1 to 20% by weight, preferably from 3 to 10% by weight, of at least one ethylenically unsaturated monomer (b'1) having at least one -COOH group, and
- from 80 to 99% by weight, preferably from 90 to 97% by weight of at least one ethylenically unsaturated monomer different from (b'1).

Amounts are herein relative to the total mass of all comonomers (b').

Comonomers (b'1) typically are selected from α,β-unsaturated monocarboxylic acids and/or from α,β-unsaturated dicarboxylic acids. Suitable examples include the acidic acrylic monomers such as acrylic and methacrylic acid, maleic, fumaric and itaconic acid and the half-esters thereof, and crotonic acid, isocrotonic acid and vinylacetic acid. Most preferably (meth)acrylic acid is being used.

Examples of such ethylenically unsaturated monomers different from (b'1) include esters of the general formula CH =C(R)COOR', wherein R is a hydrogen atom or methyl, and R' is an n-alkyl or a secondary or branched alkyl, cycloaliphatic or aromatic group. These acrylic ester comonomers representatively include methyl, ethyl, propyl, isopropyl, butyl, isobutyl, sec-butyl, pentyl, hexyl, Z-ethylhexyl, heptyl, octyl, isooctyl, nonyl, decyl, dodecyl, cyclopentyl, cyclohexyl, isobornyl, benzyl, phenyl acrylates or methacrylates and the like. Other examples of such monomers include styrene, alkyl and alkoxy styrenes, such as alpha-methyl styrene and methoxy-styrene, chlorostyrenes, cyano and carboxy-styrenes, divinylbenzene, vinyltoluene, vinyl naphthalene or alkyl substituted styrene, vinylacetate, vinylpropionate, (meth)acrylamide, methylol(meth)acrylamide, vinyl esters of versatic acid, vinylchloride, ethylene, propylene, C4-20 olefins and α-olefins. Yet other suitable examples of such monomers include acryloyl morpholine and amine containing monomers such as 2-(N,N-Diethylamino)ethyl methacrylate, 2-(N,N-Dimethylamino)ethyl acrylate, 2-(N,N-Dimethylamino)ethyl methacrylate, 2-Diisopropylaminoethyl methacrylate, 2-N-Morpholinoethyl acrylate, N-vinyl pyrolidone, N-vinyl caprolactam and 3-Dimethylaminoneopentyl acrylate.

Comonomers (b'1) can for instance be used together with at least one comonomer (b'2) and/or (b'3) that is different from (b'1).

More typically component (b') comprises a mixture of:
(b'1) from 1 to 20% by weight of at least one ethylenically unsaturated monomers having at least one -COOH group,
(b'2) from 30 to 99% by weight of at least one other ethylenically unsaturated monomer,
(b'3) from 0 to 50% by weight of at least one hydroxyl functional ethylenically unsaturated monomer,
wherein compounds (b'1) to (b'3) all differ from each other, and wherein the sum of their weight percentages advantageously equals a least 90%, preferably this sum equals 100%.

Comonomers (b'2) typically are selected from one of more of: alkyl (meth)acrylates (with C1-18 alkyl (meth)acrylates and more in particular C1-6 alkyl (meth)acrylates being preferred), styrene, divinylbenzene, alpha-methylstyrene, vinylnaphtalene and alkyl substituted styrene (with C1-2 alkyl substituted styrene being preferred).

Styrene is especially important in this context since it is an inexpensive monomer. It is therefore preferably used as one of the main substituents in component (b'2). Styrene preferably is present in amount of at least 20% by weight, more preferably at least 40% by weight and even more preferably at least 60% by weight, relative to total amount of monomers (b'2).

The optional monomer (b'3) may be chosen from the group of hydroxyl functional ethylenically unsaturated monomers. Preferred are hydroxyalkyl (meth)acrylates. Typically these include hydroxyalkyl acrylates and/or hydroxyalkyl methacrylates, wherein the alkyl residue of this compound typically contains from 1 to 4 carbon atoms, and preferably 2 carbon atoms. Preferred are hydroxyethyl(meth)acrylate, hydroxypropyl(meth)acrylate and/or hydroxybutyl(meth)acrylate.

Typically the amount of compounds (b'1), relative to the total amount of monomers (b') is at most 10% by weight. Usually the amount of compounds (b'1) where present is at least 3% by weight. Typically the amount of compounds (b'2), relative to the total amount of monomers (b') is at most 97% by weight. Usually the amount of compounds (b'2) where present is at least 70% by weight, more typically at least 80% by weight.

Typically the amount of compounds (b'3), relative to the total amount of monomers (b') is at most 40% by weight. For lithographic applications this amount is preferably at most 30% by weight, more preferably at most 20% by weight even more preferable at most 10% by weight since compounds (b'3) might otherwise negatively influence the ink-water balance of the litho binder. Where present, the amount of compounds (b'3), relative to the total amount of monomers (b') is at least 0.1% by weight, preferably at least 0.5% by weight.

In yet another embodiment of the invention, optionally, further monomers (b'4) may be used that are different from any of the monomers (b'1) to (b'3). Optional monomers (b'4) may be chosen from the group of ethylenically unsaturated monomers comprising at least one reactive functional group (different from ethylenically unsaturated groups). These reactive functional groups include hydroxyl groups, carboxylic acid groups and/or isocyanate groups. Suitable hydroxyl and carboxylic acid functional ethylenically unsaturated monomers are described in respectively (b'3) and (b'1). Suitable isocyanate functional groups include but are not limited to e.g. m-tetramethylxyleneisocyanate, 2-isocyanatoethyl acrylate or 2-isocyanatoethyl methacrylate.

Optional monomers (b'4) may be further reacted with monomers (b") comprising at least one functional group reactive towards the functional group present on monomers (b'4). Hydroxy functional groups present in (b'4) may for instance be further reacted with monomers (b") comprising at least one carboxylic acid, lactone, lactide or isocyanate functional group. Carboxylic acid functional groups present in (b'4) may for instance be further reacted with monomers (b") comprising at least one hydroxy functional group or epoxy functional group. Isocyanate functional groups present in ('4) may for instance be further reacted with monomers (b") comprising at least one hydroxyl functional group.

In such case component (b') can for instance comprise a mixture of:
(b'1) from 1 to 20% by weight of at least ethylenically unsaturated monomer having at least one -COOH group,
(b'2) from 30 to 99% by weight of at least one ethylenically unsaturated monomer,
(b'3) from 0 to 50% by weight of at least one hydroxyfunctional ethylenically unsaturated monomer,
(b'4) from 0 to 10% by weight of at least one ethylenically unsaturated monomer comprising at least one reactive function,
wherein the monomers (b'1) to (b'4) all differ from each other, and wherein the sum of their weight percentages equals 100%.

Compounds (b") can be present from 0 to 10% by weight relative to the total amount of b, b' and b".

Suitable polymerization initiators for preparing the copolymers of the invention include any of the conventional free radical-forming compounds, individually or in a mixture. Examples of such compounds are aliphatic azo compounds, diacyl peroxides, peroxy-dicarbonates, alkyl per-esters, alkyl hydroperoxides, perketals, dialkyl peroxides or ketone peroxides. Dialkyl peroxides such as di-t-butyl peroxide or di-t-amyl peroxide and alkyl per-esters such as t-butyl peroxy-2-ethylhexanoate or t-amyl peroxy-2-ethylhexanoate are preferred. The proportion of initiators may be, for example, from 0.5 to 5%, preferably up to 4%, more preferably up to 3%, most preferable up to 2% by weight, based on the total mass of the starting components.

Optionally, to achieve a good control of the molecular weight and its distribution, a chain transfer agent may be used during the process of radical polymerization of the ethylenically unsaturated copolymerizable monomers (b') used to from the copolymer (B) of the invention, preferably of the mercaptan type, such as n-dodecylmercaptan, tert-dodecanethiol, iso-octyl-mercaptan, n-octylmercaptan or of the carbon halide type, such as carbon tetrabromide, bromo-trichloromethane, can also be added in the course of the reaction. The chain transfer agent is generally used in amounts of up to 10% by weight of the monomers (b') used in the copolymerisation.

The copolymer (B) of the present invention is typically solubilized in an ethylenically unsaturated compound (A), which most typically are (meth)acrylated compounds. Acrylated compounds (A) are often preferred.

The (meth)acrylated compounds (A) used in the present invention can be in the form of monomers (A'), oligomers (A") or mixtures thereof. Preferred are those that are liquid at room temperature. Some examples of suitable compounds are given below.

### Description of possible monomers A'

The radiation curable composition can also contain lower molecular weight (meth)acrylated monomers (A') such as (meth)acrylic acid, beta-carboxyethyl acrylate, butyl(meth)acrylate, methyl(meth)acrylate, isobutyl (meth)acrylate, 2-ethylhexyl(meth)acrylate, cyclohexyl (meth)acrylate, n-hexyl (meth)acrylate, isobornyl (meth)acrylate, isooctyl (meth)acrylate, n-lauryl (meth)acrylate, octyl/decyl (meth)acrylate, 2-hydroxyethyl(meth)acrylate, phenoxyethyl(meth)acrylate, nonylphenolethoxylate mono(meth)acrylate, 2-(2-ethoxyethoxy)ethyl(meth)acrylate, 2-butoxyethyl (meth)acrylate, Cardura (meth)acrylate (the (meth)acrylate of the glycidyl ester of neodecanoic acid also known as Cardura® E-10P), phenylglycidylether(meth)acrylate and the ethoxylated or/and propoxylated derivatives thereof, the (meth)acrylates obtained from the esterification with (meth)acrylic acid of aliphatic glycidyl ethers, especially those wherein the alkyl chain comprises from 6 to 24 carbon atoms, more preferably from 8 to 18 carbon atoms, and/or of glycidyl esters of saturated and unsaturated carboxylic acids, especially the glycidyl esters of long chain alkyl carboxylic acids wherein the alkyl chain, 1,6-hexanediol di(meth)acrylate, 3(4),8(9)-bis-(hydroxymethyl)-tricyclo-[5.2.1.02'6]decane di(meth)acrylate, di or tri propylene glycol di(meth)acrylate, ethoxylated and/or propoxylated neopentylglycoldi(meth)acrylate, isosorbide di(meth)acrylate, and ethoxylated and/or propoxylated derivatives thereof, bisphenol A di(meth)acrylate and the ethoxylated and/or propoxylated derivatives thereof, trimethylolpropanetri(meth)acrylate and the ethoxylated and/or propoxylated derivatives thereof, ditrimethylolpropanetri(meth)acrylate, glyceroltri(meth)acrylate and the ethoxylated and/or propoxylated derivatives thereof, pentaerythritoltriacrylate (PETIA) and the ethoxylated and/or propoxylated derivatives thereof, dipentaerythritol penta or hexaacrylate and the ethoxylate and/or propoxylated derivatives thereof.

Preferably the (meth)acrylated monomers (A') contain at most 10% by weight of a monofunctional (meth)acrylates, more preferably at most 5% by weight of a monofunctional (meth)acrylates. Even more preferably the (meth)acrylated monomers (A') are substantially free from any monofunctional (meth)acrylates, for instance they comprise at most 1% of such monofunctional (meth)acrylates. Preferably acrylated monomers (A') are used that contain at least 3 acrylate groups such as pentaerythritoltriacrylate (PETIA) and the ethoxylated and/or propoxylated derivatives thereof, trimethylolpropanetriacrylate (TMPTA) and the ethoxylated and/or propoxylated derivatives thereof, di-trimethylolpropanetriacrylate (diTMPTA), glyceroltriacrylate and the ethoxylated and/or propoxylated derivatives thereof, dipentaerythritol penta or hexaacrylate and the ethoxylated and/or propoxylated derivatives thereof.

Generally, the composition of the present invention comprises at least 20%, more preferably at least 25% and most preferably at least 30% by weight of ethylenically unsaturated compounds (A'), based on the total weight of (A'), (A"), (B), (C) and (D). Compounds (A"), (C) and (D) are further defined infra.

The amount of such compounds (A') in the radiation curable composition of the invention usually does not exceed 90% by weight, preferably it does not exceed 85% by weight and more preferably it does not exceed 80% by weight.

### Description of possible oligomers (A")

Examples of (meth)acrylated oligomers (A") that can be used in the present invention include amino (meth)acrylate oligomers, polyester (meth)acrylates, (poly)urethane (meth)acrylates and epoxy (meth)acrylates. Once more the acrylated forms are preferred. The oligomers are preferably having a molecular weight of from 500 to 5000 dalton. The oligomer typically comprises at least 2 functional groups per molecule.

Polyester (meth)acrylate oligomers are well known. These (meth)acrylated polyesters can be obtained by reacting a hydroxyl group-containing polyester backbone with (meth)acrylic acid, or by reacting a carboxyl group-containing polyester backbone with a hydroxyalkyl (meth)acrylate such as for example 2-hydroxyethyl acrylate, 2- or 3-hydroxypropyl acrylate, etc. or with glycidyl (meth)acrylate. The polyester backbone can be obtained in a conventional manner by polycondensation of at least one polyhydroxy alcohol, such as ethylene glycol, propylene glycol, butanediol, neopentyl glycol, hexanediol, trimethylolpropane, bisphenol A, pentaerythritol, etc, or/and the ethoxylates and/or propoxylates thereof, with at least one polycarboxylic acid or anhydride thereof such as adipic acid, phthalic acid, isophthalic acid, terephthalic acid, trimellitic acid, etc. By using unsaturated compounds for the polyester synthesis, such as for example fumaric acid, maleic acid, itaconic acid, etc., polyesters bearing both (meth)acrylic and ethylenic unsaturations in the polymer chain, can be obtained. In addition polylactones and/or polylactides can be used as polyester backbone. For example poly(ε-caprolactone), polylactide and/or poly(lactide,caprolactone) can beobtained by ring-opening polymerization of ε-caprolactone and/or lactide optionally in the presence of one or more polyhydroxy alcohols. Preferred are the polyester (meth)acrylate oligomers commercialized as EBECRYL® 450, EBECRYL® 452, EBECRYL® 657, and EBECRYL® 870 available from Allnex.

Polyether (meth)acrylate oligomers can be prepared by esterification of hydroxyfunctional polyethers with (meth)acrylic acid. Hydroxyfunctional polyethers can be obtained by ring-opening homo- or copolymerization of cyclic ethers such as tetrahydrofuran, ethylene oxide and/or propylene oxide, or can be prepared by reacting polyhydroxy alcohols with ethylene and/or propylene oxide.

Polycarbonate (meth)acrylate oligomers are known. They can be prepared by esterification of hydroxyfunctional polycarbonates with (meth)acrylic acid.

Urethane (meth)acrylate oligomers can be prepared by reacting a di- and/or polyisocyanate, such as hexamethylene-diisocyanate, isophorone-diisocyanate, toluene-diisocyanate, with hydroxyl functional (meth)acrylate. Use can be made exclusively of hydroxyl functional (meth)acrylates such as those mentioned above, but in order to extend the chain, mono- or polyhydroxy alcohols can also be added, such as those mentioned above for the synthesis of polyesters polyesters, polyethers or polycarbonates containing hydroxyl groups.

Most preferred are urethane acrylates commercialized as EBECRYL® 220, EBECRYL® 2220, EBECRYL® 230, EBECRYL® 270, UCECOAT® 6569 and EBECRYL® 4883 available from Allnex.

By epoxy (meth)acrylate oligomers is meant to designate the (meth)acrylic esters of epoxides, preferably polyepoxides, i.e. compounds comprising at least one, preferably at least two epoxide functions. Epoxy (meth)acrylate oligomers are generally obtained from the esterification reaction of (meth)acrylic acid with epoxides. The epoxides are generally chosen from epoxidized olefins, glycidyl esters of saturated or unsaturated carboxylic acids, glycidyl ethers of aromatic or aliphatic alcohols or polyols and from cycloaliphatic polyepoxides. Preferred epoxides are diglycidylethers of aromatic and aliphatic diols and cycloaliphatic diepoxides such as diglycidyl ether of bisphenol-A, diglycidyl ether of bisphenol-F, diglycidylether of poly(ethylene oxide-co-propylene oxide), diglycidylether of polypropylene oxide, diglycidylether of hexanediol, diglycidylether of butanediol. Particularly preferred is diglycidyl ether of bisphenol-A. Also epoxidized natural oils or epoxidized phenol-formaldehyde copolymers can be used. Examples of natural oils include soybean oil, linseed oil, perilla oil, fish oil, dehydrated castor oil, tung oil, coconut oil, corn oil, cottonseed oil, olive oil, palm oil, palm kernel oil, peanut oil, sunflower oil, safflower oil, castor oil.

Examples of suitable epoxy acrylates include EBECRYL® 860, EBECRYL® 3420, EBECRYL® 1608, EBECRYL® 3608, EBECRYL® 3702, EBECRYL® 3701, EBECRYL® 3700.

(Meth)acrylated (meth)acrylic oligomers can be obtained by first preparing a (meth)acrylic copolymer by copolymerization of (meth)acrylate monomers such as butyl acrylate with monomers containing pendant carboxylic acid, anhydride, hydroxy, glycidyl or isocyanate groups and by then reacting this copolymer with an monomer comprising at least one (meth)acrylate functional group and at least one carboxylic acid, anhydride, hydroxyl, glycidyl or isocyanate reactive groups. For example, a glycidyl group-containing copolymer can first be prepared by copolymerizing functionalized monomers such as glycidyl (meth)acrylate with other (meth)acrylate monomers, the said glycidyl group-containing polymer being usually reacted in a second step with (meth)acrylic acid. When the functionalized monomers are (meth)acrylic acid, the carboxyl group-containing polymer is generally reacted in the second step with glycidyl (meth)acrylate. Optionally amino (meth)acrylates can be added as such to the composition of the invention. Examples of suitable amino (meth)acrylates include EBECRYL® 7100, EBECRYL® 80, EBECRYL® 81, EBECRYL® 83, EBECRYL® 85, EBECRYL® LEO 10551, EBECRYL® LEO 10552 & EBECRYL® LEO 10553, all available from Allnex.

The compositions (I) according to the invention may optionally comprise other inert resins (C), which do not take part in the polymerization reaction like the ones described in e.g. WO2002/38688, WO2005/085369, EP1411077 & US5919834. By "other" is meant that it is different from the inert copolymer (B). Examples of such optional inert resins (C) typically include hydrocarbons (such as styrene based hydrocarbon resins), styrene allyl alcohol polymers, styrene maleic anhydride polymers and halfesters thereof, (poly)urethane resins, polyethylenevinylacetate resins, polyvinylchloride resins, polyesters, chlorinated polyesters, polyvinyl butyraldehyde, polydiallylphtalate, chlorinated polyolefin resins and/or ketone resins. The total amount of such optional inert resins (C), possibly mixtures thereof, does usually not exceed 40% by weight, preferably this amount does not exceed 20% by weight, most preferably does not exceed 10% by weight based on the total weight of inert polymers (B) and (C). Even more preferable this amount does not exceed 5% by weight.

The composition of the invention can, optionally, further comprise amine derivatives (D) obtained from the reaction between diluting monomers as described above and amines, wherein the amine derivative obtained contains no residual free (meth)acrylate groups. Typically secondary amines such as described in WO 2008/000696 are used in this reaction. Examples of suitable amine derivatives (D) are EBECRYL® P 115 and EBECRYL® P 116, available from Allnex.

Generally, the composition of the present invention comprises at least 10 wt% (% by weight), more preferably at least 15 wt% and most preferably at least 20 wt% of ethylenically unsaturated compounds (A), relative to the total weight of the compounds (A), (B), (C) and (D). The amount of such compounds (A) in the composition usually does not exceed 90 wt% (% by weight), preferably does not exceed 85 wt% and more preferably does not exceed 80 wt% based on the total weight of the compounds (A), (B), (C) and (D).

Generally, the composition of the present invention comprises at least 10 wt% (% by weight), more preferably at least 15wt% and most preferably at least 20 wt% of the copolymer (B) based on the total weight of the compounds (A), (B), (C) and (D). The amount of copolymer (B) in the composition usually does not exceed 90wt%, preferably does not exceed 80 wt%, and more preferably does not exceed 70 wt% based on the total weight of the compounds (A), (B), (C) and (D).

Viscosity of the binder, more in particular of the blend composed of compounds (A), (B) and optionally (C) and (D), typically ranges from 100 to 200000 mPa.s at 25°C measured at a shear rate of 100 sec⁻¹. When the binder used in a lithographic application preferably the viscosity ranges from 10000 to 150000 mPa.s at 25°C measured at a shear rate of 100 sec⁻¹. More preferably the viscosity ranges from 20000 to 120000 mPa.s. at 25°C and 100 sec⁻¹ as measured using a cone and plate type rheometer with a cone diameter of 25 mm and at an angle of 1° for the cone. In flexographic application preferably the viscosity ranges from 100 to 20000 mPa.s at 25°C and 100 sec⁻¹. More preferably the viscosity ranges from 300 to 10000 mPa.s at 25°C and 100 sec⁻¹ measured using a cone and plate type rheometer with a cone diameter of 25 mm and at an angle of 1° for the cone.

The compositions (I) according to the invention can be prepared by any method suitable therefore. They are usually prepared by dissolving the copolymer (B) in at least part of the ethylenically unsaturated compounds (A) added, preferably at a temperature of at least 20 °C, more preferably of at least 30 °C, most preferably of at least 60 °C. The temperature preferably does not exceed 160 °C, more preferably it does not exceed 150 °C. The compositions according to the invention can be prepared in the presence of an organic solvent, which is thereafter eliminated from the composition, for example by stripping. More preferably, no solvents are used.

An aspect of the invention relates to coating compositions, adhesives and in particular inks and varnishes that comprise a binder composition as described above (any of the above). Provided are inks and varnishes that are prepared from the binder compositions of the invention. The invention also relates to a process for the preparation of inks, in particular lithographic, flexographic inks, letter press and screen inks, wherein a binder composition according to the invention is used. Preferably, this invention relates to a process for the preparation of flexographic and lithographic inks. Therefore, the composition may further comprise one or more compounds selected from pigments, photoinitiators, and ink additives.

Litho-and flexographic inks are generally made in 2 steps, the pigment dispersion step and the letdown step. The radiation curable composition according to the invention can be used in one or both of these steps. The composition according to the invention is preferably used as binder at least in the first step. In the first step, the pigments and optionally a photoinitiator, photoactivator, fillers and/or additives are added to at least part of the composition comprising the resin (B), the ethylenically unsaturated compounds (A), and the optional resin (C) or (D). They are mixed and then dispersed on a triple roll or bead mill. A few passes might be necessary to achieve a good dispersion. Pigments that are difficult to disperse generally require more number of passes. The compositions according to the invention showing good pigment wetting, permit to limit the number of additional passes. Once the pigment has achieved this fineness, the pigment paste is further diluted with the letdown. This letdown is preferably composed of the same resin components (A), (B) and optionally (C) or (D). The letdown has to be compatible with the binder used to disperse the pigments. The finished ink is then printed onto a substrate. The ink is then cured under a UV lamp, for example at 120 W/cm or 140 W/cm and 30 m/min. A few passes may be required to cure the ink.

An advantage of using the radiation curable binder compositions of the invention is that one can achieve excellent adhesion on plastic substrates while maintaining good ink properties such as pigment wetting and ink-water balance.

The invention also relates to the polymeric compositions obtainable by curing the radiation curable composition as well as to substrates being partially or entirely coated with the polymeric composition.

The pigments used in the compositions of the invention are those pigments generally used in paste or liquid inks. A list of such pigments can be found in the Color Index. More particularly, those pigments may be cited such as Process Yellow 13 (Diarylide Yellow-Irgalite BAW of Ciba, Permanent GR of Clariant), Process Magenta Pigment Red 57 (Bona Calcium-Ilobona, Irgalite SMA of Ciba), Process Blue 15:3 (Copper Phthalocyanine-Irgalite GLO of Ciba, Hostaperm Blue B2G of Clariant), Process Black 7 (Oxidised Carbon Black-Special Black 250; Special Black 350 of Degussa), etc. The pigments are preferably used at 1 to 50% by weight, more preferably at 1 to 40% by weight of the total weight of the composition

The photoinitiators usable in the compositions of the invention are well known in the art. They can be chosen from α-hydroxyketones, α-aminoketones, benzildimethyl-ketals, acyl phosphines, benzophenone derivatives, thioxanthones and blends of these. They are used at 0 to 15% by weight relative to the total weight of the ink composition. Photoactivators are generally chosen between amine derivatives. The photoinitiators need only be used if the compositions are cured by ultraviolet light. The compositions may also be cured by electron beams rays, and, in this case, no photoinitiator needs to be added to the composition.

The additives are those commonly used in inks, such as stabilizers, substrate wetting agents, antifoam agents, dispersing agents, etc. The total amount of those additives does usually not exceed 5% by weight of the total weight of the composition.

As fillers products such as calciumcarbonate, talc (magnesium silicate), kaolin clay (aluminium silicate), bariumsulphate, aluminium hydroxide, siliciumdioxide can be used. The amount of fillers is generally from 0 to 15% by weight of the total weight of the composition.

Typically the compositions of the invention are not water- or solvent-based compositions, and typically the amount of solvents (including water) in the compositions, if present at all, is at most 5% by weight, in particular at most 3% by weight, more in particular at most 1% by weight, relative to the total weight of the final (e.g. ink) composition. With the term "solvent" is meant in particular organic solvents.

An aspect of the invention relates to coating compositions, inks or varnishes comprising a composition, more in particular a binder composition according to the invention.

The compositions according to the invention after curing permit to obtain excellent adhesion on various organic and inorganic substrates such as plastic, metal, glass, wood, paper. In particular adhesion on plastic substrates polystyrene, polyethylene terephthalate, polycarbonate, polypropylene, bioriented polypropylene, polyethylene, polyvinylchloride, polyester, polyamide, glass and metal sheets films is good. Plastics can be of any type, e.g. the woven or non- woven type, can be nonporous, permeable or semi-permeable etc. The plastic can be rigid but preferably is flexible. An advantage of the compositions of the invention is that they permit to obtain good adhesion on e.g. plastics without the need of an adhesion primer.

The finished lithographic ink preferably has a viscosity of at least 10 Pa.s and generally does not exceed 200 Pa.s at 25 °C measured at a shear rate of 100 s⁻¹. The finished flexographic ink has a viscosity higher than 300 mPa.s, preferably at least 500 mPa.s and does not exceed 20000 mPa.s, preferably it does not exceed 10000 mPa.s. measured at a shear rate of 2500 s⁻¹ at 25°C (measured using a cone and plate type rheometer with a cone diameter of 25 mm and at an angle of 1° for the cone). The measurement is generally done by measuring a flow curve in controlled shear rate ranging from D=0,1 s⁻¹ to D=2500 s⁻¹ at 25°C.

Finally, the invention relates to a process for coating an article or a substrate comprising the step of applying onto at least one surface of said article or of said substrate the composition of the invention, following by curing of the applied layer. The composition of the invention can be directly applied onto said substrate or said article without the need of an adhesion primer. A physical treatment (e.g. corona) and/or chemical treatment before applying the radiation curable composition is preferred in some cases. The composition of the invention can be applied in one or more layers of between 0.5 and 10 µm by means of lithographic process, flexographic process, gravure, screenprinting, letterpress, roller coater, curtain coater. Preferably it is applied by a lithographic or flexographic process. The material or surface to be coated can comprise plastic, in particular can be made of plastic, including a non polar plastic. The plastic can be flexible or rigid.

Further provided is also a method of improving adhesion of a radiation curable ink to a substrate in a printing process, said method comprising the step of applying a composition of the invention (more in particular an ink of the invention) to a surface of the substrate followed by a step of curing by radiation, typically ultraviolet radiation. The composition of the invention can be applied in one or more layers of between 0.5 and 10 µm by means of for instance a lithographic or flexographic process. The material or surface to be coated can comprise plastic, in particular can be made of plastic, including a non polar plastic. The plastic can be flexible or rigid. An advantage of this process is that the composition of the invention can be applied directly onto the substrate. In other words, no primer layer needs to be applied first.

As will be demonstrated below inks according to the invention exhibit excellent adhesion on a wide variety of plastic substrates. At the same time, a good combination of adhesion, pigment wetting and ink-water balance is obtained.

The invention will now be illustrated by the following non-limiting examples which are by way of illustration only. Unless otherwise indicated, all the test results and properties herein were performed using conventional methods well known to those skilled in the art. The amounts in the tables are given in % by weight based on the total weight of the composition.

### Examples

### Synthesis examples

Synthesis examples 1,2,3,4,5 (**Table 1**) and synthesis examples 12,13,14,15 (**Table 2**) are prepared by charging an amount of Cardura™ E10 glycidyl ester (available from Momentive) in a 3 liter round bottom glass reactor, equipped with reflux condenser, thermocouple, anchor stirrer and nitrogen purge, which had been flushed with nitrogen and heating up to the reaction temperature of 155°C under nitrogen. Subsequently, the monomer mix (see **Table 1** and **Table 2**) together with the initiator ditertiary amylperoxide (Luperox® DTA from Arkema) and optionally a chain transfer agent (nDDM = n-dodecylmercaptan) (see examples 12,13,14,15 in **Table 2**) was gradually added over a period of 5 hours maintaining a reaction temperature of from 150 to 155°C, under constant stirring and under a light nitrogen flow.
When the feed was completed, the mixture was reprimed with 10 g of the initiator being added over a period of 1 hour at a constant temperature of 155°C. When the post reaction was finished, the product was heated for three hours at 180°C in order to eliminate residual peroxide. Subsequently the polymer is cooled down to a temperature of 120°C and diluted with a radiation curing monomer under air sparging to the viscosity suitable for the intended use.

Synthesis examples 6,7,8,9,10,11 (**Table 3**) are prepared by charging an amount of Cardura™ E10 glycidyl ester (available from Momentive) in a pressure reactor, equipped with reflux condenser, thermocouple, anchor stirrer and nitrogen purge, which had been flushed with nitrogen and heating up to the reaction temperature of 180°C under nitrogen. A monomer feed mixture according to **Table 3** was gradually added over a period of 6 hours at a constant temperature of from 180 to 185°C, under constant stirring. Simultaneously with the monomer mix a solution of ditertair amyl peroxide initiator in 50 g of butylacetate was added separately from the monomer feed mixture over a period of 7 hrs. When the reaction was finished, the acrylic polymer formed was stripped under nitrogen for 3 hours at 180°C to eliminate residual peroxide and removing the butylacetate solvent. Subsequently the polymer is cooled down to a temperature of 120°C and diluted with a radiation curing monomer under air sparging to the viscosity suitable for the intended use.

**Table 1:**

| | **Synthesis EX1** | **Synthesis EX2** | **Synthesis EX3** | **Synthesis EX4** | **Synthesis EX5** |
|---|---|---|---|---|---|
| Glycidyl ester (Cardura E10) | 150 | 150 | 150 | 150 | 150 |
| Monomer mix | | | | | |
| Acrylic acid | 50 | 50 | 50 | 50 | 50 |
| Methyl methacrylate | | 200 | 200 | 200 | |
| Butyl methacrylate | | | 100 | 200 | |
| Ethylhexyl acrylate | | | | | 200 |
| Styrene | 800 | 600 | 500 | 400 | 600 |
| Ditertiairy amyl peroxide initial (reprime) | 40(10) | 40 (10) | 40 (10) | 40 (10) | 40 (10) |
| Acrylic polymer properties before dilution with diluting monomer | | | | | |
| Acid number (mg KOH/g) | 5,1 | 4,5 | 3,5 | 2,8 | 3,8 |
| GPC | | | | | |
| Mn (g/mol) | 3910 | 3770 | 3490 | 2950 | 3920 |
| Mw (g/mol) | 10500 | 10500 | 9300 | 9900 | 12100 |
| PD = Mn/Mw | 2,7 | 2,79 | 2,66 | 3,4 | 3,1 |
| Tg (DSC measurement, °C) | 57 | 46 | 30 | 23 | 22 |
| Diluting monomer (wt%) vs acrylic polymer (B) EBECRYL® 160 | 49 | 49 | 40 | 40 | 38 |
| Viscosity (mPa.s), 25°C (Cone and plate) | 50000 | 116000 | 99500 | 115000 | 94000 |

| | | | | | |
|---|---|---|---|---|---|
| EBECRYL® 160 = ethoxylated trimethylolpropane (from Allnex) | | | | | |

**Table 2**

| | **Synthesis EX12** | **Synthesis EX13** | **Synthesis EX14** | **Synthesis EX15** |
|---|---|---|---|---|
| Glycidyl ester (Cardura E10) | 150 | 150 | 150 | 150 |
| Monomer mix | | | | |
| Acrylic acid | 50 | 50 | 50 | 50 |
| t-butyl acrylate | | | 200 | |
| n-butyl acrylate | 200 | | | |
| Stearyl acrylate | | 100 | | |
| Acryloyl morpholine | | 100 | | 200 |
| Styrene | 600 | 600 | 600 | 600 |
| Ditertiairy amyl peroxide | 30 | 30 | 30 | 30 |
| nDDM | 20 | 20 | 20 | 20 |
| Acrylic polymer properties before dilution | | | | |
| Acid number (mg KOH/g) | 4,2 | 3,6 | 5,1 | 3,9 |
| GPC | | | | |
| Mn (g/mol) | 3520 | 3770 | 3640 | 3460 |
| Mw (g/mol) | 10100 | 11700 | 10650 | 12400 |
| PD = Mn/Mw | 2,87 | 3,1 | 2,9 | 3,58 |
| Tg (DSC measurement, °C) | 29 | 45 | 35 | 71 |
| Diluting monomer (wt%) vs acrylic polymer (B) TMPTA | 42,5 | 50 | 51 | 55 |
| Viscosity (mPa.s), 25°C (Cone and plate) | 126400 | 127100 | 116700 | 118600 |

**Table 3:**

| | **Synthesis EX6** | **Synthesis EX7** | **Synthesis EX8** | **Synthesis EX9** | **Synthesis EX10** | **Synthesis EX11** |
|---|---|---|---|---|---|---|
| Glycidyl ester (Cardura E10) | 150 | 150 | 150 | 221 | 221 | 150 |
| Monomer mix | | | | | | |
| Acrylic acid | 50 | 50 | 50 | 77 | 77 | 50 |
| Methyl methacrylate | | 200 | 200 | 114 | 114 | |
| Butyl methacrylate | | | | | | 200 |
| Ethylhexylacrylate | | | | | | |
| Hydroxyethylmethacrylate | | | | 204 | 204 | |
| Isobornyl methacrylate | | | | 144 | | |
| Styrene | 800 | 600 | 600 | 240 | 384 | 600 |
| Ditertiairy amyl peroxide | 20 | 17,5 | 17,5 | 13 | 13 | 17,5 |
| Acrylic polymer properties before dilution | | | | | | |
| Acid number (mg KOH/g) | 3,3 | 0,7 | 0,7 | 5.7 | 7,3 | 0,5 |
| GPC | | | | | | |
| Mn (g/mol) | 3880 | 2700 | 2700 | 1690 | 2240 | 3170 |
| Mw (g/mol) | 9970 | 8060 | 8060 | 3210 | 5270 | 9140 |
| PD = Mn/Mw | 2.57 | 3,0 | 3,0 | 1,9 | 2,4 | 2,9 |
| Tg (DSC measurement, °C) | 47 | 50 | 50 | 25 | 35 | 38 |
| Dilution monomer (w%) vs acrylic polymer (B) | EB 160 (48 %) | EB 160 (48 %) | TMPTA (52 %) | EB LEO 10501 (64 %) | EB LEO 10501 (65 %) | EB LEO 10501 (68 %) |
| Viscosity (mPa.s), 25°C (Cone and plate) | 112000 | 115000 | 112000 | 1820 | 2490 | 2080 |

| | | | | | | |
|---|---|---|---|---|---|---|
| EB= EBECRYL®, TMPTA= trimethylolpropane triacrylate (from Allnex), EBECRYL® LEO 10501: ethoxylated trimethylol propane (from Allnex) | | | | | | |

### Litho binder formulation examples:

With the above compositions and some comparative compositions the following ink formulation were prepared: Formulation Examples FEX1-FEX7 & FEX-1R. The comparative example (FEX-1R) is based on a commercial inert chlorinated polyester diluted in 40% (wt%) of TMPTA. The composition of the various ink formulations is given in **Table 4.**

Various properties of the litho ink formulations and UV cured inks were measured including pigment wetting, water balance, reactivity and adhesion on plastic substrates. The results are summarized in **Table 5.**

We can conclude that binders of present invention show good pigment wetting (tested by measuring shortness index, optical density and gloss). Ink-water balance is superior compared to the comparative example (FEX-1R) which can be seen by the lower delta torque. Adhesion tested on different substrates is superior to the comparative example.

Further, a comparison between Formulation Examples FEX8-FEX10 and a litho ink formulation based on a comparative chlorinated polyester diluted in TMPTA (FEX-2R - FEX-4R) was conducted with various pigments. The ink formulations prepared are summarized in **Table 6.**

Again the litho ink formulations and UV cured inks were evaluated on various parameters including their pigment wetting, ink-water balance, reactivity and adhesion on plastic substrates. The results are summarized in **Table 7.**

Finally the litho ink formulations FEX11-FEX14 were prepared as summarized in **Table 8** and UV cured inks were evaluated again on parameters including their pigment wetting, ink-water balance, reactivity and adhesion on plastic substrates. The results are summarized in **Table 9.**

These data demonstrate that the compositions of the present invention exhibit an improved overall balance of properties including water balance, pigment wetting and adhesion to a variety of plastic substrates.

### Test methods and conditions for the litho binders:

**Pigment wetting** can be evaluated by different methods:
Rheology: Pigment wetting is a major factor of influence on the rheology. Inks with bad wetting of the pigment are showing a marked shear thinning effect, whereby the viscosity is high at low shear rate and drops as the shear rate is increased. This results in a high shortness index (SI=ratio of low shear viscosity to high shear viscosity. For liquid inks a Newtonian rheology is required. Ideally, this means that the viscosity is independent of the shear rate. (SI=1). Paste inks are more pseudoplastic, showing a shear depending viscosity. (SI>1). Too high SI (too high low shear viscosity) may result in bad flow in the ink duct. The rheology is measured with cone and plate type rheometers.
Optical density: Pigment wetting can also be evaluated by measuring the color density of the printed ink at constant film thickness. In this case the ink is printed using a lab applicator and the color density is measured with a densitometer, which spectrophotometrically compares the reflected light to the incident light.

For the present invention the pigment wetting is rated on a scale from 5=excellent to 0=bad pigment wetting.

The **water balance** of the compositions of the present invention was evaluated on lithotronic. Basically, the Lithotronic measures the torque needed for a certain speed (rpm). The torque gives a measure for viscosity. With the Lithotronic, the change in viscosity of an ink is measured when water is emulsified in it.

The measurement consists of two phases: preconditioning and measurement.

During preconditioning, the sample is sheared at constant speed and heated at the same time to a certain preprogramed temperature. At the end of the preconditioning phase, the sample has reached a stable viscosity. At that moment, controlled metering of fount solution is started. Changes of applied torque (hence viscosity) versus time and emulsion capacity are recorded. When maximum emulsion capacity is reached, a drop in torque is usually experienced because of the free water in the beaker.

At first contact with water, change of torque (delta T) should be small. Further, when water is emulsified in the ink, viscosity should only undergo a minor increase. This ensures a good ink transfer on the press. If the emulsion is too fine and too stable (too high increase of viscosity), it will lead to a loss of density and possible ink build up. If the emulsion is too coarse (viscosity decrease), it can lead to unstable press behaviour making regular press control necessary.

For the present invention the ink water balance is rated by the type of emulsion (5=good ink water balance characterized by a limited viscosity increase, resulting from a fine emulsion; 1=bad ink water balance characterized by a high viscosity decrease, resulting from a coarse emulsion).

**UV reactivity:** a film of 1.2µm is applied on the tested BOPP (bioriented polypropylene exposed to UV radiations from a 120 W/cm or 140 W/cm non focalized medium pressure mercury lamp under air. For magenta and cyan inks: the fully cured aspect of the film is assessed by putting some graphite carbon black (Pencil Nr 2) onto the printed surface and rubbing with a finger and then with a cotton swab. As long as a black trace is left on the printed ink surface, the film is not fully cured and passed again under the UV-lamp. This is the so-called "graphite test". For black inks: the fully cured aspect of the film is assessed by putting some talc onto the printed surface and rubbing with a finger and then with a cotton. As long as a mat aspect is observed, the film is not fully cured. In both cases one assesses the minimum speed required to obtain full curing (m/min).

**Adhesion:** a film of 1.2µm is applied on the tested substrate and exposed to UV radiations from a 120W/cm or 140 W/cm non focalized medium pressure mercury lamp at a speed of 1 or 3 x 30 m/min. A string of adhesive tape (Tesa 4104) is pressed on the surface and the interlay er is degassed.

The tape is then snatched off. Based on the % of the surface removed by the tape, a value of adhesion is given: 5 (0% of the surface removed), 4 (20% of the surface removed), 0 (100% of the surface removed).

**Table 4:**

| | **FEX1** | **FEX2** | **FEX3** | **FEX4** | **FEX5** | **FEX6** | **FEX7** | **FEX-1R** |
|---|---|---|---|---|---|---|---|---|
| Synthesis EX1 | 65,5 | | | | | | | |
| Synthesis EX2 | | 60 | | | | | | |
| Synthesis EX3 | | | 63 | | | | | |
| Synthesis EX4 | | | | 59 | | | | |
| Synthesis EX5 | | | | | 61 | | | |
| Synthesis EX6 | | | | | | 61 | | |
| Synthesis EX7 | | | | | | | 61 | |
| Chlorinated polyester | | | | | | | | 60 |
| Stab 12/1⁽¹⁾ | 1 | 1 | 1 | 1 | 1 | 1 | 1 | 1 |
| Pigment Blue 15:3 | 20 | 20 | 20 | 20 | 20 | 20 | 20 | 20 |
| PI blend⁽²⁾ | 8 | 8 | 8 | 8 | 8 | 8 | 8 | 8 |
| TMPTA | | | | | | | | 11 |
| EBECRYL® 160 | 5,5 | 11 | 8 | 12 | 10 | 10 | 10 | |

| | | | | | | | | |
|---|---|---|---|---|---|---|---|---|
| ⁽¹⁾ Stab 12/1: polymerization inhibitor (5% solution of NPAL in DPGDA (DiPropyleneGlycolDiAcrylate) ; NPAL = Tris(N-nitroso-N-phenylhydroxylamine)aluminium salt) ⁽²⁾ PI blend: Benzophenone 14%, BDK 34%, Irgacure 369 (BASF) 7%, ITX 13%, EPD 32% | | | | | | | | |

**Table 5:**

| | **FEX1** | **FEX2** | **FEX3** | **FEX4** | **FEX5** | **FEX6** | **FEX7** | **FEX-1R** |
|---|---|---|---|---|---|---|---|---|
| Pigment wetting | 4 | 4 | 4 | 4 | 4 | 4 | 4 | 4 |
| viscosity 2,5 s⁻¹ (mPa.s) - 25°C | 64,3 | 62,4 | 61,5 | 68,1 | 65 | 60 | 63,4 | 71,1 |
| viscosity 100 s⁻¹ (mPa.s) - 25°C | 34,9 | 35,1 | 34,3 | 36,2 | 33,8 | 34,6 | 35,5 | 33,2 |
| Shortness Index | 1,8 | 1,8 | 1,8 | 1,9 | 1,9 | 1,7 | 1,8 | 2,1 |
| Optical Density | 2,18 | 2,23 | 2,26 | 2,25 | 2,22 | 2,28 | 2,22 | 2,29 |
| Gloss - 1,5 g/m2 60°C | 26 | 26 | 23 | 24 | 23 | 25 | 25 | 32 |
| Ink-water balance | | | | | | | | |
| Delta Torque (%) | 5 | 12 | 11 | 14 | 7 | 5 | 9,5 | 29 |
| Emulsion | 3 | 2 | 2 | 3 | 3 | 3 | 3 | 2 |
| Reactivity 120W/cm (m/min Hg lamp) | 15 | 10 | 10 | 5 | 5 | 10 | 15 | 20 |
| Adhesion (belt speed 3 x 30 m/min 120 W/cm Hg lamp) | | | | | | | | |
| PP | 4 | 4 | 5 | 4 | 5 | 4 | 5 | 5 |
| PE | 4 | 4 | 4 | 4 | 4 | 4 | 5 | 4 |
| PVC-1 | 5 | 5 | 5 | 5 | 4 | 5 | 5 | 1 |
| PVC-2 | 4 | 5 | 5 | 5 | 4 | 5 | 5 | 1 |
| PET-1 | 5 | 5 | 5 | 5 | 5 | 5 | 5 | 5 |
| PET-2 | 5 | 5 | 5 | 5 | 5 | 5 | 5 | 0 |
| PET-3 | 1 | 5 | 4 | 5 | 2 | 2 | 5 | 0 |
| PC | 5 | 5 | 5 | 5 | 5 | 5 | 5 | 4 |

| | | | | | | | | |
|---|---|---|---|---|---|---|---|---|
| PP Polypropylene film P C58 : BOPP without adhesion primer PE Natural polyethylene (Transilwrap) PVC-1 Polyvinylchloride film (supplier unkown) PVC-2 Polyvinylchloride film - PR-M180/23-71/8400-100_0 (Klockner Pentaplast) PET-1 Polyethylene terephtalate film :Melinex 561 (Tekra) PET-2 Polyethylene terephtalate film - PET-GAG PR-CG6GE44-1160000-100_0 () 0 (Klockner Pentaplast) PET-3 Polyethylene terephtalate film - PET RNK (Hostaphan) PC Polycarbonate | | | | | | | | |

**Table 6:**

| | **Magenta** | | **Cyan** | | **black** | |
|---|---|---|---|---|---|---|
| | **FEX8** | **FEX-2R** | **FEX9** | **FEX3-R** | **FEX10** | **FEX-4R** |
| Synthesis EX7 | 58 | | 51 | | 48 | |
| Synthesis EX-1R (Compar.) | | 57,5 | | 55 | | 50 |
| Stab 12/1⁽¹⁾ | 1 | 1 | 1 | 1 | 1 | 1 |
| Pigment Black 7 | | | | | 20 | 20 |
| Pigment Blue 15:3 | | | 17 | 17 | | |
| Pigment Red 57:1 | 18 | 18 | | | | |
| Talc | 3 | 3 | 3 | 3 | 3 | 3 |
| PI blend⁽²⁾ | 10 | 8 | 10 | 10 | 10 | 10 |
| TMPTA | | 12,5 | 8 | 4 | 8 | 6 |
| DPHA | 10 | | 10 | 10 | 10 | 10 |

| | | | | | | |
|---|---|---|---|---|---|---|
| ⁽¹⁾ Stab 12/1: polymerization inhibitor (5% solution of NPAL in DPGDA (DiPropyleneGlycolDiAcrylate) ; NPAL = Tris(N-nitroso-N-phenylhydroxylamine)aluminium salt) ⁽²⁾ PI blend: Benzophenone 14%, BDK 34%, Irgacure 369 (BASF) 7 %, ITX 13 %, EPD 32 % | | | | | | |

**Table 7:**

| | **Magenta** | | **Cyan** | | **Black** | |
|---|---|---|---|---|---|---|
| | **FEX8** | **FEX-2R** | **FEX9** | **FEX-3R** | **FEX10** | **FEX-4R** |
| Pigment wetting | 4 | 1 | 4 | 4 | 4 | 2 |
| viscosity 2,5 s⁻¹ (mPa.s) - 25°C | 140 | 286 | 61,6 | 73,6 | 90,6 | 134 |
| viscosity 100 s⁻¹ (mPa.s) - 25°C | 82,4 | 81,4 | 36,2 | 31,8 | 33,3 | 34,4 |
| Shortness Index | 1,7 | 3,5 | 1,7 | 2,3 | 2,7 | 3,9 |
| Optical Density | 1,88 | 1,92 | 2,13 | 2,1 | 2,11 | 2,04 |
| Gloss - 1,5 g/m2 60°C | 20 | 20 | 25 | 23 | 19 | 18 |
| Ink-water balance | | | | | | |
| Delta Torque (%) | 13 | 27 | 11,5 | 28 | 12,5 | 26,5 |
| Emulsion | 4 | 2 | 4 | 3 | 4 | 2 |
| Reactivity 140 W/cm Hg Lamp (m/min) | 35 | 35 | 30 | 55 | 10 | 35 |
| Adhesion (1x30 m/min 140 W/cm Hg lamp) | | | | | | |
| PP | 5 | 5 | 4 | 4 | 4 | 4 |
| PE | 5 | 5 | 5 | 5 | 4 | 4 |
| PVC-1 | 5 | 4 | 5 | 3 | 5 | 2 |
| PVC-2 | 5 | 3 | 5 | 0 | 5 | 0 |
| PVC-3 | 5 | 0 | 5 | 0 | 5 | 1 |
| PET-2 | 5 | 3 | 5 | 4 | 5 | 5 |
| PET-3 | 2 | 0 | 1 | 0 | 2 | 0 |
| PC | 5 | 2 | 5 | 2 | 5 | 4 |

**Table 8:**

| | **FEX11** | **FEX12** | **FEX13** | **FEX14** |
|---|---|---|---|---|
| Synthesis EX12 | 64,2 | | | |
| Synthesis EX13 | | 66 | | |
| Synthesis EX14 | | | 65,5 | |
| Synthesis EX15 | | | | 65,5 |
| Stab 12/1⁽¹⁾ | 1 | 1 | 1 | 1 |
| Talc | 3 | 3 | 3 | 3 |
| Pigment Red 57:1 | 18 | 18 | 18 | 18 |
| PI blend ⁽²⁾ | 10 | 10 | 10 | 10 |
| TMPTA | 3,8 | 2 | 2,5 | 2,5 |

| | | | | |
|---|---|---|---|---|
| ⁽¹⁾ Stab 12/1: polymerization inhibitor (5% solution of NPAL in DPGDA (DiPropyleneGlycolDiAcrylate) ; NPAL = Tris(N-nitroso-N-phenylhydroxylamine)aluminium salt) ⁽²⁾ PI blend: Benzophenone 14%, BDK 34%, Irgacure 369 (BASF) 7 %, ITX 13 %, EPD 32 % | | | | |

**Table 9:**

| | **FEX11** | **FEX12** | **FEX13** | **FEX14** |
|---|---|---|---|---|
| Pigment wetting | 5 | 5 | 5 | 5 |
| viscosity 2,5 s⁻¹ (mPa.s) - 25°C | 64,3 | 62,4 | 61,5 | 68,1 |
| viscosity 100 s⁻¹ (mPa.s) - 25°C | 34,9 | 35,1 | 34,3 | 36,2 |
| Shortness Index | 1,8 | 1,8 | 1,8 | 1,9 |
| Optical Density | 2,18 | 2,23 | 2,26 | 2,25 |
| Gloss - 1,5 g/m2 60°C | 26 | 26 | 23 | 24 |
| Ink-water balance | | | | |
| Emulsion | 4 | 4 | 4 | 4 |
| Reactivity 140 W/cm Hg Lamp (m/min) | 30 | 40 | 35 | 50 |
| Adhesion (belt speed 3 x 30 m/min 120 W/cm Hg lamp) | | | | |
| PP | 3 | 5 | 5 | 5 |
| PE | 5 | 5 | 5 | 5 |
| PVC-1 | 5 | 4 | 5 | 5 |
| PVC-2 | 5 | 5 | 5 | 5 |
| PET-2 | 5 | 5 | 5 | 5 |
| PC | 5 | 5 | 4 | 5 |

### Flexo binder formulation examples:

The pigment paste was prepared as follows: 51 wt% of the binder was mixed with 40 wt% of pigments and 9 wt% of additives (**Table 10**). In particular 51 g of the binder was blended at 25 °C with 1 g of Stab 12/1, 3.7 g of SOLSPERSE® 39000 (a 100% active polymeric dispersant from Lubrizol), 4.3 g of SOLSPERSE® 5000 premix (1,3 g SOLSPERSE® 5000 from Lubrizol grinded in 3,0 g EBECRYL® 450) and 40 g of Pigment Blue 15:3. The paste was grinded on triple roll mill until the right grinding gauge was obtained.

**Table 10:**

| | Pigment paste |
|---|---|
| Resin | 51 |
| Solsperse S39000 | 3,7 |
| Solsperse S5000 Paste | 4,3 |
| Stab 12/1⁽¹⁾ | 1 |
| Pigment Blue 15:3 | 40 |

| | |
|---|---|
| (1) Stab 12/1: polymerization inhibitor (5% solution of NPAL in DPGDA (DiPropyleneGlycolDiAcrylate) | |

The ink was prepared from this pigment paste by diluting further with the resin binder, photoinitiator and diluting monomers to achieve the target viscosity. In particular cyan inks were prepared by blending at 25 °C 38 g of the binder with 10 g of a photoinitiator mix (composition: 30% ITX (isopropylthioxanthone); 25% Speedcure EDB from Lambson; 25% Speedcure EHA from Lambson; 5% Speedcure PBZ from Lambson; 15% IRGACURE® 369 from BASF), 11 g of EBECRYL® LEO 10501 (from Allnex), 1 g of Stab 12/1 and 40 g of the pigment paste.

Various properties of the obtained ink formulations were measured. A comparison was made between Formulation Examples FEX15-FEX17 and between flexo ink formulations based on a comparative low viscosity polyester acrylate oligomer (FEX-5R), based on a comparative chlorinated polyester diluted in TMPTA (FEX-6R), and based on a comparative carboxylic acid terminated polyester (FEX-7-R). Results are summarized in **Table 11** below.

The table shows that the compositions according to the present invention permit to obtain inks with an improved overall balance of properties. In particular the balance between adhesion, pigment wetting was found excellent.

**Table 11:**

| | **FEX15** | **FEX16** | **FEX17** | **FEX5-R** | **FEX-6R** | **FEX-7R** |
|---|---|---|---|---|---|---|
| Synthesis EX9 | 38 | | | | | |
| Synthesis EX10 | | 38 | | | | |
| Synthesis EX11 | | | 38 | | | |
| EBECRYL® 452 (polyester acrylate) | | | | 38 | | |
| Chlorinated polyester (PP 430) | | | | | 38 | |
| Carboxylic acid terminated polyester (PP 724) | | | | | | 38 |
| EBECRYL® LEO 10501 | 11 | 11 | 11 | 11 | 11 | 11 |
| PI12/4⁽³⁾ | 10 | 10 | 10 | 10 | 10 | 10 |
| Stab 12/1⁽¹⁾ | 1 | 1 | 1 | 1 | 1 | 1 |
| Pigment Paste | 40 | 40 | 40 | 40 | 40 | 40 |
| Reactivity | 3x60 | 2x60 | 2x60 | 3x60 | 2x60 | 1x60 |
| Pigment wetting (1->5 best) | 4 | 3 | 2 | 5 | 4 | 1 |
| Optical density | 1,67 | 1,58 | 1,56 | 1,74 | 1,73 | 1,60 |
| zero viscosity at 25 °C | 2320 | 4350 | 19100 | 11900 | 2660 | 213000 |
| viscosity at 2,5 s⁻¹ at 25 °C | 2150 | 2930 | 3120 | 3170 | 2050 | 7910 |
| viscosity at 2500 s⁻¹ at 25 °C | 1360 | 1820 | 1620 | 919 | 1230 | 1620 |
| Adhesion (1x30 m/min) | | | | | | |
| Rayoface C58 (Innovia) | 5 | 1 | 0 | 1 | 0 | 1 |
| Crystal® GND (Treofan) | 4 | 2 | 4 | 1 | 1 | 0 |
| Crystal® NND (Treofan) | 4 | 1 | 4 | 0 | 1 | 0 |
| Bicor ®20 MB400 (Jindal films) | 3 | 2 | 1 | 4 | 2 | 1 |
| Hostaphan® RNK (Hostaphan) | 4 | 2 | 4 | 1 | 0 | 0 |
| Polyflex® TDO GP (Sidaplax) | 4 | 4 | 1 | 5 | 4 | 4 |
| Oppalyte® 40 MW 648 (Jindal films) | 5 | 4 | 5 | 0 | 1 | 0 |

| | | | | | | |
|---|---|---|---|---|---|---|
| ⁽³⁾ PI 12/4: 30% ITX (isopropylthioxanthone); 25% Speedcure EDB from Lambson; 25% Speedcure EHA from Lambson; 5% Speedcure PBZ from Lambson; 15% Irgacure 369 from BASF Rayoface® C58: bioriented polypropylene (=BOPP) without adhesion primer of Innovia Films, Crystal®GND: BOPP film without adhesion primer from Treofan, Crystal® NND: BOPP film without adhesion primer from Treofan, Bicor®20 MB 400: BOPP - uncoated from Jindal Films, Hostaphan®RNK: polyethyleneterephtalate (=PET) substrate without adhesion primer from Hostaphan, Polyflex® GP TDO : polystyrene film from Sidaplax; Oppalyte® 40MW648 from Jindal films which is an acrylic coated BOPP | | | | | | |

### Test methods and conditions for the flexo binders:

**UV reactivity:** a film of 1.2µnι is applied on the tested BOPP (bioriented polypropylene), PET (polyethyleneterephtalate), polyester substrates without adhesion primer but with corona treatment and exposed to UV radiations from a 120 W/cm non focalized medium pressure mercury lamp at a defined conveyer speed (60 m/min) under air. For yellow, magenta and cyan inks: the fully cured aspect of the film is assessed by putting some graphite carbon black (Pencil Nr 2) onto the printed surface and rubbing with a finger and then with a cotton swab. As long as a black trace is left on the printed ink surface, the film is not fully cured and passed again under the UV-lamp. This is the so-called "graphite test". For black inks: the fully cured aspect of the film is assessed by putting some talc onto the printed surface and rubbing with a finger and then with a cotton. As long as a mat aspect is observed, the film is not fully cured. In both cases one assesses the number of times that the film has to pass at 60 m/min to obtain full curing (x passes at 60 m/min). The lower "x" is, the higher the cure speed.

**Adhesion:** a film of 1.2µπι is applied on the tested substrate and exposed to UV radiations from a 120W/cm non focalized medium pressure mercury lamp at a speed of 60 m/min and fully cured as described in the reactivity method. A string of adhesive tape (Tesa 4104) is pressed on the surface and the interlay er is degassed. The tape is then snatched off. Based on the % of the surface removed by the tape, a value of adhesion is given: 100 (0% of the surface removed), 80 (20% of the surface removed), 0 (100% of the surface removed).

**Pigment wetting** properties of the resin is evaluated during different stages: during pigment paste preparation stage and after curing.

During pigment paste preparation phase the pigment wetting is evaluated in the following way: For the present invention the pigment wetting is rated on a scale from 5 = excellent to 0 = bad pigment wetting. To assess pigment wetting the weight of the binder (blend of compounds (A), (B) and optionally (C)) and of the pigment that will be put on top of the binder are first determined, and then both are mixed by hand. Then the easiness of mixing (wetting) the pigment with the binder is determined. When a homogeneous paste is obtained, it is grinded on a three roller mill (2x at 12 bar) and the behavior on the rolls is being checked. In case of a bad pigment wetting, dry pigment can be found on the rolls. The dispersion rate on the grinding gauge is checked as confirmation of bad wetting. With the grinding gauge the thickness of the pigment particles is measured. The smaller the size of the particles, the better is the pigment wetting. The high gloss of the paste on the rolls is also an indication of good pigment wetting.

Pigment wetting after curing is evaluated by measuring the optical density (after this step).

**Optical density:** The color density of the printed ink at constant film thickness is measured. In this case the ink is printed using a lab applicator and the color density is measured with a densitometer, which spectrophotometrically compares the reflected light to the incident light. Here, a Gretag Macbeth Spectroeye Spectrophotometer / Densitometer equipped with the appropriate filters was used to measure optical density. Film thickness (in g/m2) is determined by comparing the weight of the printed form or substrate before and after printing.

**Rheology (yield value, viscosity, shortness index):** is measured using a cone and plate type rheometer MCR100 (Paar-Physica) following ISO 3219. The measurement geometry for measuring the (flexo) inks of the inventions was of a diameter of 25mm and an angle of 1° for the cone. The measurement was a flow curve in controlled shear rate ranging from D = 0 s⁻¹ (zero viscosity), D = 2.5 s⁻¹ to D = 2500 s⁻¹ at 25 °C.

In conclusion the overall balance of properties improved when using compositions according to the invention. In particular the balance between adhesion and pigment wetting was found excellent.

### General test methods:

**Acid value:** total acid number (IAc in mg KOH/g) were measured using potentiometric titration. Different titrant solutions i.e. KOH 0.1 N and/or KOH 0.5N can be used when analyzing samples with low respectively high total acid number. Potentiometric titration allows end-point identification automatically by means of a titroprocessor and a pH electrode, the manual titration uses a color indicator (phenolphthalein) for visual end -point identification. The amount of KOH is used to calculate the total acid number.

**Viscosity of the resin:** is measured at a fixed shear rate (100 sec⁻¹) with a cone and plate type rheometer MCR100 (Paar-Physica) unless otherwise indicated.

**Transition temperatures (Tg)** were measured by DSC following ASTM E1356-08.

**Molecular weight distribution** was measured by gel permeation chromatography (GPC). It was determined with 3 x PLgel 5µm Mixed-D LS 300 x 7.5mm separation columns, polystyrenes calibration (MW range : 200 - 400.000 Daltons), TetrahydroFuran (THF) as solvent and Refractive Index as detector.

## Claims

1. A radiation curable composition comprising:
- at least one ethylenically unsaturated compound (A), and
- at least one copolymer (B) with 0.1 or fewer equivalents of radiation curable reactive groups per kilogram, that is obtained by an addition reaction of:
(b) from 3 to 50% by weight of at least one monofunctional glycidyl ether (b1) and/or at least one monofunctional glycidyl ester (b2) of aliphatic saturated monocarboxylic acids
during the free radical polymerization of:
(b') from 50 to 97% by weight of at least two ethylenically unsaturated copolymerizable monomers of which at least one contains at least one -COOH group (b'1),
wherein the quantity of -COOH groups in component (b'1) is at least equimolar to the quantity of epoxy groups in component (b), and
wherein the amount of solvents in the radiation curable composition is below 10% by weight.

2. The radiation curable composition according to claim 1 wherein compounds (b) that are used to prepare the copolymer (B) comprise at least one monofunctional glycidyl ester (b2) of aliphatic saturated monocarboxylic acids having a tertiary or quaternary alpha carbon atom.

3. The radiation curable composition according to any of the preceding claims, wherein the ethylenically unsaturated monomers (b') that are used to prepare the copolymer (B) comprise, relative to the total mass of all comonomers (b'), a mixture of
(b'1) from 1 to 20% by weight of at least one ethylenically unsaturated monomer having at least one -COOH group,
(b'2) from 30 to 99% by weight of at least one ethylenically unsaturated monomer selected from the group consisting of C1-C18 alkyl (meth)acrylates, styrene, divinylbenzene, alpha-methylstyrene, vinylnaphtalene and C1-2 alkyl substituted styrene,
(b'3) from 0 to 50% by weight of at least one C1-C4 hydroxyalkyl (meth)acrylate,
wherein the monomers (b'1) to (b'3) all differ from each other, and wherein the sum of their weight percentages equals 100%.

4. The radiation curable composition according to any of the preceding claims, wherein monomers (b'1) that are used to prepare the copolymer (B) are selected from the group consisting of acrylic acid, methacrylic acid and mixtures thereof.

5. The radiation curable composition according to any of the preceding claims comprising, relative to the total weight of (A) and (B), from 10 to 90% by weight of (meth)acrylated compounds (A) and from 10 to 90% by weight of inert copolymers (B).

6. The radiation curable composition according to any of the preceding claims, wherein the radical polymerization of the ethylenically unsaturated copolymerizable monomers (b') used to form the copolymer (B) takes place in the presence of at least one polymerization initiator selected from the group consisting of di-tert-butyl peroxide, di-tert-amyl peroxide, tert-butyl peroxy-2-ethylhexanoate and/or tert-amyl peroxy-2-ethylhexanoate.

7. The radiation curable composition according to any of the preceding claims, wherein the radical polymerization of the ethylenically unsaturated copolymerizable monomers (b') used to form the copolymer (B) takes place in the presence of at least one chain transfer agent selected from the group consisting of n-dodecylmercaptan and tert-dodecanethiol.

8. The radiation curable composition according to any of the preceding claims, wherein the copolymer (B) has a number average molecular weight of from 750 to 20000 dalton.

9. The radiation curable composition according to any of the preceding claims, wherein the ethylenically unsaturated compound (A) is a (meth)acrylated compound having from 2 to 6 (meth)acrylate groups.

10. A coating composition, adhesive, ink or varnish comprising at least one radiation curable composition according to any of claims 1 to 9.

11. A radiation curable ink composition according to claim 10, further comprising at least one photoinitiator and at least one pigment.

12. The radiation curable ink composition according to claim 10 or 11 which is a lithographic ink with a viscosity of between 10000 and 200000 mPa.s at 25°C and 100 sec⁻¹, and comprising from 10 to 50% by weight of the copolymers (B) as defined above.

13. The radiation curable ink composition according to claim 10 or 11 which is a flexographic ink with a viscosity of between 100 and 20000 mPa.s at 25°C and 100 sec⁻¹, and comprising from 5 to 50% by weight of the copolymers (B) as defined above.

14. The radiation curable ink composition according to any of claims 10 to 13 comprising, relative to the total amount of compounds (A) in said composition, at least 10% by weight of (meth)acrylated compounds (A) containing at least three (meth)acrylate groups.

15. An article coated, partially or entirely, with a coating composition according to claim 10.

16. Use of a radiation curable binder composition according to any of claims 1 to 9 for the making of a coating composition, adhesive, ink or varnish.

## Patentansprüche

1. Strahlungshärtbare Zusammensetzung, umfassend:
- mindestens eine ethylenisch ungesättigte Verbindung (A) und
- mindestens ein Copolymer (B) mit 0,1 oder weniger Äquivalenten von strahlungshärtbaren reaktiven Gruppen pro Kilogramm, das erhalten wird durch eine Additionsreaktion von:
(b) 3 bis 50 Gew.-% von mindestens einem monofunktionellen Glycidylether (b1) und/oder mindestens einem monofunktionellen Glycidylester (b2) aliphatischer, gesättigter Monocarbonsäuren
während der Radikalkettenpolymerisation von:
(b') 50 bis 97 Gew.-% von mindestens zwei ethylenisch ungesättigten, copolymerisierbaren Monomeren, von denen mindestens eines mindestens eine -COOH-Gruppe (b'1) enthält,
wobei die Menge an -COOH-Gruppen in Komponente (b'1) zumindest äquimolar zur Menge an Epoxidgruppen in Komponente (b) ist, und
wobei die Menge an Lösungsmitteln in der strahlungshärtbaren Zusammensetzung unter 10 Gew.-% liegt.

2. Strahlungshärtbare Zusammensetzung nach Anspruch 1, wobei Verbindungen (b), die zur Herstellung des Copolymers (B) verwendet werden, mindestens einen monofunktionellen Glycidylester (b2) von aliphatischen, gesättigten Monocarbonsäuren mit einem tertiären oder quartären alpha-Kohlenstoffatom umfassen.

3. Strahlungshärtbare Zusammensetzung nach einem der vorhergehenden Ansprüche, wobei die ethylenisch ungesättigten Monomere (b'), die zur Herstellung des Copolymers (B) verwendet werden, bezogen auf die Gesamtmasse aller Comonomere (b'), ein Gemisch aus
(b'1) 1 bis 20 Gew.-% mindestens eines ethylenisch ungesättigten Monomers mit mindestens einer -COOH-Gruppe,
(b'2) 30 bis 99 Gew.-% mindestens eines ethylenisch ungesättigten Monomers, ausgewählt aus der Gruppe, bestehend aus C1-C18-Alkyl(meth)acrylaten, Styrol, Divinylbenzol, alpha-Methylstyrol, Vinylnaphthalin und C1-2-Alkyl-substituiertem Styrol,
(b'3) 0 bis 50 Gew.-% von mindestens einem C1-C4-Hydroxyalkyl(meth)acrylat, umfassen, wobei alle Monomere (b'1) bis (b'3) verschieden voneinander sind, und wobei die Summe ihrer Gewichtsprozentsätze gleich 100 % ist.

4. Strahlungshärtbare Zusammensetzung nach einem der vorhergehenden Ansprüche, wobei die Monomere (b'1), die zur Herstellung des Copolymers (B) verwendet werden, ausgewählt sind aus der Gruppe, bestehend aus Acrylsäure, Methacrylsäure und Gemischen davon.

5. Strahlungshärtbare Zusammensetzung nach einem der vorhergehenden Ansprüche, umfassend, bezogen auf das Gesamtgewicht von (A) und (B), 10 bis 90 Gew.-% (meth)acrylierte Verbindungen (A) und 10 bis 90 Gew.-% inerte Copolymere (B).

6. Strahlungshärtbare Zusammensetzung nach einem der vorhergehenden Ansprüche, wobei die Radikalkettenpolymerisation der ethylenisch ungesättigten, copolymerisierbaren Monomere (b'), die zur Bildung des Copolymers (B) verwendet werden, in Gegenwart von mindestens einem Polymerisationsinitiator stattfindet, der ausgewählt ist aus der Gruppe, bestehend aus Di-tert-butylperoxid, Di-tert-amylperoxid, tert-Butylperoxy-2-ethylhexanoat und/oder tert-Amylperoxy-2-ethylhexanoat.

7. Strahlungshärtbare Zusammensetzung nach einem der vorhergehenden Ansprüche, wobei die Radikalkettenpolymerisation der ethylenisch ungesättigten, copolymerisierbaren Monomere (b'), die zur Bildung des Copolymers (B) verwendet werden, in Gegenwart von mindestens einem Kettenüberträger stattfindet, der ausgewählt ist aus der Gruppe, bestehend aus n-Dodecylmercaptan und tert-Dodecanthiol.

8. Strahlungshärtbare Zusammensetzung nach einem der vorhergehenden Ansprüche, wobei das Copolymer (B) ein zahlenmittleres Molekulargewicht von 750 bis 20.000 Dalton hat.

9. Strahlungshärtbare Zusammensetzung nach einem der vorhergehenden Ansprüche, wobei die ethylenisch ungesättigte Verbindung (A) eine (meth)acrylierte Verbindung mit 2 bis 6 (Meth)acrylatgruppen ist.

10. Beschichtungszusammensetzung, Haftmittel, Druckfarbe oder Lack, umfassend mindestens eine strahlungshärtbare Zusammensetzung nach einem der Ansprüche 1 bis 9.

11. Strahlungshärtbare Druckfarbenzusammensetzung nach Anspruch 10, ferner umfassend mindestens einen Photoinitiator und mindestens ein Pigment.

12. Strahlungshärtbare Druckfarbenzusammensetzung nach Anspruch 10 oder 11, die eine Lithographiefarbe mit einer Viskosität zwischen 10.000 und 200.000 mPa·s bei 25 °C und 100 s⁻¹ ist und 10 bis 50 Gew.-% der oben definierten Copolymere (B) umfasst.

13. Strahlungshärtbare Druckfarbenzusammensetzung nach Anspruch 10 oder 11, die eine Farbe für Flexodruck mit einer Viskosität zwischen 100 und 20.000 mPa·s bei 25 °C und 100 s⁻¹ ist und 5 bis 50 Gew.-% der oben definierten Copolymere (B) umfasst.

14. Strahlungshärtbare Druckfarbenzusammensetzung nach einem der Ansprüche 10 bis 13, umfassend, bezogen auf die Gesamtmenge an Verbindungen (A) in der Zusammensetzung, mindestens 10 Gew.-% (meth)acrylierter Verbindungen (A), die mindestens drei (Meth)acrylatgruppen enthalten.

15. Gegenstand, der teilweise oder vollständig mit einer Beschichtungszusammensetzung nach Anspruch 10 beschichtet ist.

16. Verwendung einer strahlungshärtbaren Bindemittelzusammensetzung nach einem der Ansprüche 1 bis 9 zur Herstellung einer Beschichtungszusammensetzung, eines Haftmittels, einer Druckfarbe oder eines Lackes.

## Revendications

1. Composition durcissable par rayonnement comprenant :
- au moins un composé éthyléniquement insaturé (A), et
- au moins un copolymère (B) avec 0,1 équivalent ou moins de groupes réactifs durcissables par rayonnement par kilogramme, qui est obtenu par une réaction d'addition de :
(b) de 3 à 50 % en poids d'au moins un éther glycidylique monofonctionnel (b1) et/ou d'au moins un ester glycidylique monofonctionnel (b2) d'acides monocarboxyliques aliphatiques saturés
pendant la polymérisation radicalaire de :
(b') de 50 à 97 % en poids d'au moins deux monomères éthyléniquement insaturés copolymérisables dont au moins un contient au moins un groupe -COOH (b'1),
la quantité de groupes -COOH dans le constituant (b'1) étant au moins équimolaire avec la quantité de groupes époxy dans le constituant (b), et
la quantité de solvants dans la composition durcissable par rayonnement étant inférieure à 10 % en poids.

2. Composition durcissable par rayonnement selon la revendication 1 dans laquelle les composés (b) qui sont utilisés pour préparer le copolymère (B) comprennent au moins un ester glycidylique monofonctionnel (b2) d'acides monocarboxyliques aliphatiques saturés ayant un atome de carbone alpha tertiaire ou quaternaire.

3. Composition durcissable par rayonnement selon l'une quelconque des revendications précédentes, dans laquelle les monomères éthyléniquement insaturés (b') qui sont utilisés pour préparer le copolymère (B) comprennent, rapporté à la masse totale de tous les comonomères (b'), un mélange de
(b'1) de 1 à 20 % en poids d'au moins un monomère éthyléniquement insaturé ayant au moins un groupe -COOH,
(b'2) de 30 à 99 % en poids d'au moins un monomère éthyléniquement insaturé choisi dans le groupe constitué par les (méth)acrylates d'alkyle en C1-C18, le styrène, le divinylbenzène, l'alpha-méthylstyrène, le vinyl-naphtalène et le styrène substitué par des groupes alkyle en Cl-2,
(b'3) de 0 à 50 % en poids d'au moins un (méth)acrylate d'hydroxyalkyle en C1-C4,
les monomères (b'1) à (b'3) étant tous différents les uns des autres, et la somme de leurs pourcentages pondéraux étant égale à 100 %.

4. Composition durcissable par rayonnement selon l'une quelconque des revendications précédentes, dans laquelle les monomères (b'1) qui sont utilisés pour préparer le copolymère (B) sont choisis dans le groupe constitué par l'acide acrylique, l'acide méthacrylique et les mélanges de ceux-ci.

5. Composition durcissable par rayonnement selon l'une quelconque des revendications précédentes comprenant, rapporté au poids total de (A) et (B), de 10 à 90 % en poids de composés (méth)acrylés (A) et de 10 à 90 % en poids de copolymères inertes (B).

6. Composition durcissable par rayonnement selon l'une quelconque des revendications précédentes, dans laquelle la polymérisation radicalaire des monomères éthyléniquement insaturés copolymérisables (b') utilisés pour former le copolymère (B) a lieu en présence d'au moins un initiateur de polymérisation choisi dans le groupe constitué par le peroxyde de di-tert-butyle, le peroxyde de di-tert-amyle, le peroxy-2-éthylhexanoate de tert-butyle et/ou le peroxy-2-éthylhexanoate de tert-amyle.

7. Composition durcissable par rayonnement selon l'une quelconque des revendications précédentes, dans laquelle la polymérisation radicalaire des monomères éthyléniquement insaturés copolymérisables (b') utilisés pour former le copolymère (B) a lieu en présence d'au moins un agent de transfert de chaîne choisi dans le groupe constitué par le n-dodécylmercaptan et le tert-dodécanethiol.

8. Composition durcissable par rayonnement selon l'une quelconque des revendications précédentes, dans laquelle le copolymère (B) a un poids moléculaire moyen en nombre de 750 à 20 000 daltons.

9. Composition durcissable par rayonnement selon l'une quelconque des revendications précédentes, dans laquelle le composé éthyléniquement insaturé (A) est un composé (méth)acrylé ayant de 2 à 6 groupes (méth)acrylate.

10. Composition de revêtement, adhésif, encre ou vernis comprenant au moins une composition durcissable par rayonnement selon l'une quelconque des revendications 1 à 9.

11. Composition d'encre durcissable par rayonnement selon la revendication 10, comprenant en outre au moins un photoinitiateur et au moins un pigment.

12. Composition d'encre durcissable par rayonnement selon la revendication 10 ou 11 qui est une encre lithographique avec une viscosité comprise entre 10 000 et 200 000 mPa.s à 25 °C et 100 s⁻¹, et comprenant de 10 à 50 % en poids des copolymères (B) tels que définis ci-dessus.

13. Composition d'encre durcissable par rayonnement selon la revendication 10 ou 11 qui est une encre flexographique avec une viscosité comprise entre 100 et 20 000 mPa.s à 25 °C et 100 s⁻¹, et comprenant de 5 à 50 % en poids des copolymères (B) tels que définis ci-dessus.

14. Composition d'encre durcissable par rayonnement selon l'une quelconque des revendications 10 à 13 comprenant, rapporté à la quantité totale de composés (A) dans ladite composition, au moins 10 % en poids de composés (méth)acrylés (A) contenant au moins trois groupes (méth)acrylate.

15. Article recouvert, partiellement ou entièrement, d'une composition de revêtement selon la revendication 10.

16. Utilisation d'une composition de liant durcissable par rayonnement selon l'une quelconque des revendications 1 à 9 pour la préparation d'une composition de revêtement, d'un adhésif, d'une encre ou d'un vernis.
